# EUROPÄISCHE PATENTSCHRIFT

(11) **EP 1 125 489 B1**
(45) Veröffentlichungstag und Bekanntmachung des Hinweises auf die Patenterteilung: **05.12.2007**
(21) Anmeldenummer: 01102554.1
(22) Anmeldetag: 06.02.2001
(51) Int. Cl.: A01B 63/00, A01B 69/04

(54) **Verfahren zum Onland-Pflügen und dafür geeigneter Drehpflug**
Method for ploughing on land and reversible plough therefor
Procédé pour le labour sur le champ et charrue réversible adjoint

(30) Priorität: 19.02.2000 DE 10007674
(43) Veröffentlichungstag der Anmeldung: 22.08.2001
(73) Patentinhaber: Lemken GmbH & Co. KG, 46519 Alpen (DE)
(72) Erfinder: Meurs, Wilhelm, 46519 Alpen (DE)
(74) Vertreter: Schulte, Jörg

(56) Entgegenhaltungen:
- EP-A- 0 906 720
- DD-A- 231 880
- DE-A- 4 102 487
- US-A- 5 978 720

## Beschreibung

Die Erfindung betrifft ein Verfahren zur Bearbeitung von Ackerflächen mit einem Zugfahrzeug und einem Bodenbearbeitungsgerät in Form eines Onland-Pfluges. Die Erfindung betrifft außerdem ein Bodenbearbeitungsgerät in Form eines Drehpfluges mit einem über die Pflugkoppel mit dem Zugfahrzeug verbundenen Pflugrahmen.

Bei einem derartigen Verfahren bzw. bei Betrieb eines derartigen Onland-Pfluges wird die Konzentration des Fahrers des Zugfahrzeuges erheblich beansprucht, weil er das Zugfahrzeug mit dem angebauten oder angehängten Bodenbearbeitungsgerät nach einer Markierungsspur, z.B. die Fahrspur der letzten Überfahrt oder ohne Führungsmarkierung, führen muss (DE-A-41 02 487, EP-A-0 906 720). Sobald der Fahrer bei Verwendung eines Drehpfluges nicht Acht gibt, kommt es zu einer abweichenden Arbeitsbreite des ersten Pflugkörpers des Onland-Pfluges während der Arbeit, da die seitlichen Abstandsabweichungen des Zugfahrzeuges in Relation zur Furchenkante vor dem ersten Pflugkörper zu einer Abweichung der Arbeitsbreite des ersten Pflugkörpers führt. Nachteilig ist neben der großen Belastung des Fahrers mit einem Onland-Pflug, dass durch häufig notwendig werdende Korrekturen die Pflugarbeit insgesamt erheblich leidet, weil auch bei den nachfolgenden Furchen wieder entsprechende Fehler auftreten. Ein erhöhter Arbeitsaufwand bei den nachfolgenden Arbeitsgängen wie Saatbettbereitung und Bestellung sind das Ergebnis. Die aus der DD-231 880-A bekannte Einrichtung sorgt dafür, dass der erste Pflugkörper immer dicht an der Furchenkante geführt ist bzw. dort läuft. Bei der aus der EP 0 906 720 A1 bekannten Lösung ist dem Pflugrahmen eine Abtasteinrichtung zugeordnet, die die Furchenkante erkennt und über einen Computer dafür sorgt, dass das Fahrzeug seine Fahrtrichtung korrigiert. Da Zugfahrzeug und der Pflug gemeinsam die Arbeitsmaschine bilden, müssen sie gemeinsam die Fahrtrichtung verändern. Die weiter oben beschriebenen Nachteile treten somit auch hier auf.

Der Erfindung liegt daher die Aufgabe zu Grunde, den Fahrer des Zugfahrzeuges zu entlasten und auch bei größeren seitlichen Abstandsabweichungen des Zugfahrzeuges dennoch eine gleichbleibende Arbeitsbreite des ersten Pflugkörpers sicherzustellen bzw. die Arbeitsbreite des ersten Pflugkörpers so breit wie die Arbeitsbreite der nachfolgenden Pflugkörper einzustellen bzw. anzupassen. Letzteres ist dann erforderlich, wenn es sich bei dem Onland-Pflug um einen Pflug mit variabler Arbeitsbreitenverstellung handelt.

Die Aufgabe wird gemäß der Erfindung wie beansprucht dadurch verfahrensmäßig gelöst, dass wie bekannt zum Onland-Pflügen mit einem Zugfahrzeug und einem Drehpflug die Furchenkante vor dem ersten Pflugkörper und/oder die Vorderfurchenbreite erfasst und ausgewertet und zur Korrektur und Überwachung der Vorderfurchenbreite eingesetzt wird, wobei nun die Vorderfurchenbreite des Drehpfluges während der Arbeit konstant zur Arbeitsbreite der restlichen Pflugkörper gehalten wird und zwar unabhängig vom auf dem Land fahrenden Zugfahrzeug.

Mit Hilfe eines derartigen Verfahrens ist es beim Onland-Pflügen nun möglich, den Fahrer des Zugfahrzeuges extrem zu entlasten. Auch wenn das Zugfahrzeug schlangenlinienförmig gefahren wird oder sich der Abstand des Zugfahrzeuges zur Furchenkante vor dem 1. Pflugkörper ständig ändert, wird dennoch die Vorderfurchenbreite konstant gehalten bzw. der Arbeitsbreite der nachfolgenden Pflugkörper angepasst. Es wird also nicht nur bei vorgegebenen Veränderungen entsprechend korrigiert, sondern vielmehr wird die Vorderfurchenbreite überwacht und zwar unabhängig vom auf dem Land fahrenden Zugfahrzeug über den korrigierten Pflugrahmen auf der vorgegebenen Linie gehalten.

Erfindungsgemäß ist vorgesehen, dass im Grenzeinstellbereich ergänzende Lenkkorrekturen dem Fahrer und/oder dem Zugfahrzeug vorgegeben werden.

Sollten sich die Stelleinrichtungen oder Korrektureinrichtungen am Pflug hinsichtlich des Einstellbereiches bzw. Korrekturbereichs im Grenzeinstellbereich, d.h. in den Grenzen des minimalen und maximalen Einstellwertes, befinden, werden entweder dem Fahrer des Zugfahrzeuges die erforderlichen Lenkkorrekturen vorgeschlagen oder das Zugfahrzeug entsprechend in seiner Fahrtrichtung korrigiert.

Eine Weiterbildung des Verfahrens sieht dann noch vor, dass neben den zugfahrzeugbedingten Einstellkorrekturen am Pflug zusätzlich auch bei Änderungen der Arbeitsbreite pro Körper die Vorderfurchenbreite gemäß Arbeitsbreite der nachfolgenden Pflugkörper eingestellt bzw. korrigiert wird. Damit können auch Pflüge mit variabler Arbeitsbreitenverstellung mit einem derartigen Verfahren sicher betrieben werden.

Zur Durchführung des Verfahrens dient wie beansprucht ein Bodenbearbeitungsgerät in Form eines Drehpfluges, bei dem der Pflugrahmen mit einer die Furchenkante erkennenden Abtasteinrichtung verbunden ist, wobei diese auch die Vorderfurchenbreite erkennend und den seitlichen Abstand korrigierend ausgebildet und mit einem Computer verbunden ist und so eine Vorrichtung bildet, die die erforderlichen Einstellkorrekturen errechnend und über die Stelleinrichtung die Einstellkorrekturen veranlassend ausgebildet ist, wobei der Pflugrahmen mit einer Stelleinrichtung für die Einstellung des seitlichen Abstandes zwischen der Furchenkante vor dem ersten Pflugkörper und der Pflugkoppel ausgerüstet ist, die mit der die Furchenkante und die Vorderfurchenbreite erkennenden Abtasteinrichtung und dem Computer verbunden ist und so die Einstellkorrekturen des Pflugrahmens veranlasst. In Folge dieser Merkmale wird die Arbeitsbreite des ersten Pflugkörpers konstant zur Arbeitsbreite der restlichen Pflugkörper gehalten und auch bei variabler Arbeitsbreitenverstellung ist eine Einhaltung der optimalen Einstellung sicher möglich. Diese besondere Ausbildung ermöglicht eine präzise Führung des Drehpfluges und damit auch die Einhaltung bzw. Anpassung der Vorderfurchenbreite in engen Grenzen.

Eine Weiterbildung sieht vor, dass als Abtasteinrichtung ein mechanisches Tastelement vorgesehen ist, das bei Überschreiten vorgegebener Grenzwerte der Vorderfurchenbreite mit der Stelleinrichtung die Korrektur veranlassend verbunden ausgebildet ist. Über die Stelleinrichtung der Vorderfurchenbreite wird eine einfache und wirksame Möglichkeit erreicht, die Vorderfurchenbreite bzw. die Arbeitsbreite des ersten Pflugkörpers konstant zu halten bzw. sie anzupassen oder schnell zu korrigieren. Bei einem derartigen mechanischen Tastelement ist es möglich, eine wirksame Abtastvorrichtung vorzusehen, die bereits bei einfachen Steuervorrichtungen eine Konstanthaltung bzw. Anpassung der Vorderfurchenbreite möglich macht.

Weiter ist bevorzugt vorgesehen, dass als Abtasteinrichtung Sensoren vorgesehen sind, die die Furchenkante und/oder die Vorderfurchenbreite erkennend ausgebildet sind. Über diese Sensoren, gleich ob es sich um akustische, optische, induktive u.s.w. Sensoren handelt, ist es möglich, eine kostengünstige Abtasteinrichtung zu verwirklichen, die darüber hinaus auch mit anderen elektronischen Bauteilen zusammenarbeiten kann, um so die ermittelten Werte auch für eine elektronische und/oder computerunterstützte Steuerung zu nutzen.

Gemäß der Erfindung ist weiter vorgesehen, dass Abtasteinrichtung und Computer drahtlos miteinander verbunden sind. Über eine entsprechende funktechnische Ausbildung kann auf Kabel u. Ä. völlig verzichtet werden, so dass auch bei entsprechenden Entfernungen eine sichere Übertragung der einzelnen für die Messung und Führung des Pfluges notwendigen Daten möglich ist. Die Signalübertragung per Funk verhindert Störungen, die im rauen Betrieb in der Landwirtschaft mit Kabelverbindungen ansonsten sehr häufig auftreten.

Auf vorhandene Einrichtungen kann zumindest größtenteils zurückgegriffen werden, wenn gemäß der Erfindung der Computer als Bord-, Hof- oder externer Computer mit Bedienterminal ausgebildet ist. Dadurch ist es möglich, je nach Stand der Technik den Bordcomputer, den Hofcomputer oder den externen Computer eines professionellen Dienstleisters zu nutzen, der auf die Bereitstellung spezieller angepasster Softwarelösungen spezialisiert ist.

Der Drehpflug kann sowohl als Anbau-, wie als Aufsattel- oder auch als Anhängedrehpflug ausgebildet sein, weil mit Hilfe der beschriebenen Einrichtung die Vorderfurchenbreite immer exakt und für beide Pflugseiten angepasst werden kann.

Gemäß der Erfindung ist ergänzend vorgesehen, dass die Stelleinrichtung eine Vorderfurchenbreitenkorrektur und/oder -anpassung bei einer seitlichen Abstandsabweichung des Zugfahrzeuges vor der Furchenkante vor dem ersten Pflugkörper von 1 bis 100 cm korrigierend ausgebildet ist. Damit können mit der Stelleinrichtung auch große Fahrtrichtungsänderungen des Zugfahrzeuges ausgeglichen werden. Die Stelleinrichtung weist erfindungsgemäß als Stellteil einen Spindelmotor oder Hydraulikzylinder auf. Durch das Vorsehen eines Spindelmotors oder Hydraulikzylinders als Stelleinrichtung können Einstellkorrekturen mit der notwendigen Kraft immer sicher durchgeführt werden, wodurch die Vorderfurchenbreite auch in schwierigen Situationen immer optimal anpassbar bzw. nachregelbar ist.

Eine Informationsmöglichkeit für den Fahrer ist vorgesehen, indem gemäß der Erfindung dem Zugfahrzeug oder dem Bedienterminal ein die u. a. aktuelle Einstellposition der Stelleinrichtung der Vorderfurchenbreite anzeigendes Display zugeordnet ist. Damit ist es möglich, die aktuelle Einstellung der Stelleinrichtung der Vorderfurchenbreite ständig im Blickfeld zu haben und so festzustellen, ob sich die Stelleinrichtung bei seitlichen Abstandsabweichungen des Zugfahrzeuges noch im mittleren Stellbereich oder im Grenzeinstellbereich befindet. Der Fahrer des Zugfahrzeuges wird so auf Grenzsituationen aufmerksam gemacht und kann so die notwendigen Lenkkorrekturen vornehmen, wenn diese von der Stelleinrichtung nicht mehr ausreichend ausgeglichen werden können.

Erfindungsgemäß ist weiter vorgesehen, dass ein akustischer Anzeiger vorgesehen ist, der einen den Abstand zum Grenzeinstellbereich berücksichtigenden Schwellsignalton ausstrahlend ausgebildet ist. Je näher man sich dem Grenzeinstellbereich der Stelleinrichtung nähert, desto intensiver wird der Ton, so dass dem Fahrer rechtzeitig im Bedarfsfall ohne Stress die Erfordernis einer erforderlichen Lenkkorrektur vorgeschlagen wird.

Schließlich ist es mit Hilfe der Erfindung auch möglich, eine gleichbleibend gute Pflugarbeit durch kontinuierliche Beibehaltung bzw. Anpassung der Vorderfurchenbreite dadurch sicherzustellen, dass die Vorrichtung aus Computer und Abtastvorrichtung im Grenzbereich der Stelleinrichtung auf die Lenkeinrichtung des Zugfahrzeuges direkt oder indirekt einwirkend ausgebildet ist. Selbst dann, wenn der Fahrer die gegebenen Signale nicht beachtet, ist so sichergestellt, dass die notwendigen Korrekturen zum richtigen Zeitpunkt vorgenommen werden, weil dann bei Überschreitung des Grenzeinstellbereiches der Stelleinrichtung die Lenkeinrichtung des Zugfahrzeuges direkt angesprochen werden kann. Fahrfehler des Traktorfahrers können sich so nicht negativ auf die Pflugarbeit auswirken.

Erfindungsgemäß ist weiter vorgesehen, dass das Zugfahrzeug per DGPS geführt ist und die dabei üblich auftretenden Abstandsabweichungen durch Computer und Abtastvorrichtung in Verbindung mit der Stelleinrichtung die Abstandsabweichungen korrigierend ausgebildet ist. Bei auftretenden Ungenauigkeiten der GPS oder DGPS unterstützten Führung des Zugfahrzeuges können mit der Vorrichtung mit Computer, Abtastvorrichtung und zusätzlicher Stelleinrichtung ebenfalls die Vorderfurchenbreite optimal geregelt bzw. eingehalten werden.

Mit der Erfindung ist es möglich, in praktisch allen Arbeitssituationen eine exakte Führung des Pfluges und Anpassung der Vorderfurchenbreite des Pfluges zu gewährleisten, ohne dass der Fahrer des Zugfahrzeuges wie bisher extrem belastet, gefordert oder sogar überfordert wird. Auch bei größeren Abweichungen des Zugfahrzeuges von der optimalen Fahrlinie wird die Vorderfurchenbreite konstant gehalten, korrigiert bzw. nachgeregelt, und zwar mittels der Stelleinrichtung, die von der Vorrichtung aus Computer und Abtastvorrichtung betätigt bzw. geschaltet wird.

Weitere Einzelheiten und Vorteile des Erfindungsgegenstandes ergeben sich aus der nachfolgenden Beschreibung und den zugehörigen Zeichnungen, in denen die dazu notwendigen Einzelheiten dargestellt sind. Es zeigen:
Fig. 1 einen Aufsattel- bzw. Anhängedrehpflug und
Fig. 2 einen Anbaudrehpflug mit optimierter Führung.

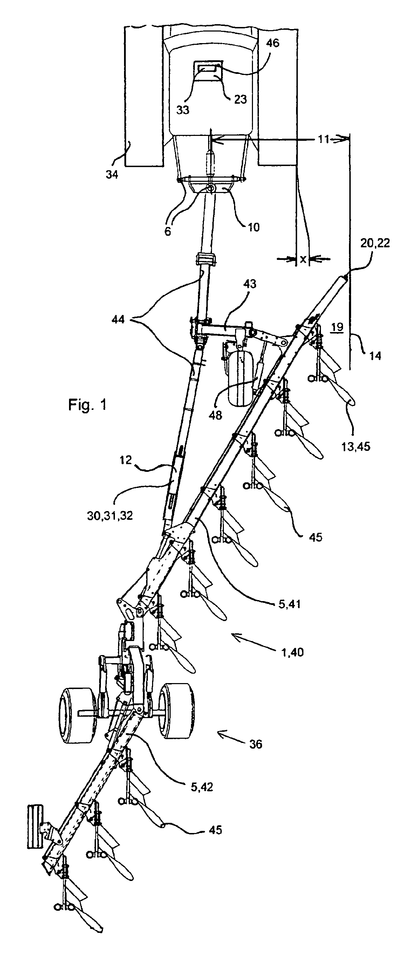

Die Fig. 1 zeigt einen Drehpflug 1, und zwar einen Aufsattel- bzw. Anhängedrehpflug 40 mit Verbindungsmitteln 6 für das Anschließen an ein Zugfahrzeug 34. Die Verbindungsmittel 6 sind Bestandteil der Pflugkoppel 10, die über die Trag- und Zugeinrichtung 44 mit Drehvorrichtung 43 und dem Pflugrahmen 5 verbunden ist.

Der Pflugrahmen 5 besteht aus einem vorderen Pflugrahmen 41 und einem hinteren Pflugrahmen 42. Der vordere und der hintere Pflugrahmen 41, 42 sind über das Fahrwerk 36 miteinander verbunden. An der Trag- und Zugeinrichtung 44 ist eine Stelleinrichtung 12 für die Vorderfurchenbreite 19 vorgesehen, über die die Vorderfurchenbreite 19 bzw. der seitliche Abstand 11 zwischen der Pflugkoppel 10 und der Furchenkante 14 vor dem ersten Pflugkörper 13 eingestellt werden kann. Sowohl der vordere als auch der hintere Pflugrahmen 41, 42 weisen mehrere Pflugkörper 45 auf. Vorne am Pflugrahmen 41 befindet sich eine Abtastvorrichtung 20, die mit einem Sensor 22 ausgerüstet ist. Über den Sensor 22 wird die Furchenkante 14 vor dem ersten Pflugkörper 13 erfasst, Der Sensor 22 ist vorzugsweise um den Abstand der Pflugkörper 45 zueinander vor dem ersten Pflugkörper 13 angeordnet.

Auch bei Veränderung der Arbeitsbreite pro Pflugkörper 45 muss die seitliche Lage des Sensors 22 bzw. der Abtastvorrichtung 20 nicht verändert werden. Der Sensor 22 steht in Verbindung mit dem Computer 23. Seitliche Abweichungen x werden vom Sensor 22 erfasst und vom Computer 23 ausgewertet. Der Computer 23 wirkt direkt auf das Stellteil 30 der Stelleinrichtung 12 für die Vorderfurchenbreite 19 ein. Dadurch wird der Abstand von der Pflugkoppel 10 zur Furchenkante 14 vor dem ersten Pflugkörper 13 so angepasst, dass die Vorderfurchenbreite 19 des ersten

Pflugkörpers 13 gleich bleibt. Das Stellteil 30 kann z. b. ein Spindelmotor 31 sein, der elektrisch betrieben wird oder auch ein Hydraulikzylinder 32.

Der Computer 23 verfügt über ein Bedienterminal mit Display 33, das den aktuellen Abstand der Pflugkoppel 10 zur Furchenkante 14 vor dem ersten Pflugkörper 13 und auch die Stellung der Stellvorrichtung 12 für die Vorderfurchenbreite 19 anzeigt.

Der Fahrer des Zugfahrzeuges 34 kann so erkennen, ob er sich im mittleren Einstellbereich oder im Grenzeinstellbereich des Stellteils 30 der Stelleinrichtung 12 befindet. Der Fahrer des Zugfahrzeuges 34 kann so extreme Abstandsabweichungen x, die von der Stelleinrichtung nicht mehr ausgeglichen werden können, durch Gegenlenken ausgleichen. Mit der hydraulischen Stellvorrichtung 48 kann der Drehpflug 1 für den Onland-Einsatz oder für den Einsatz in der Furche umgestellt werden. Diese hydraulische Stelleinrichtung 48 kann ebenfalls für die gleiche Funktion genutzt werden wie die Stelleinrichtung 12 für die Vorderfurchenbreite 19.

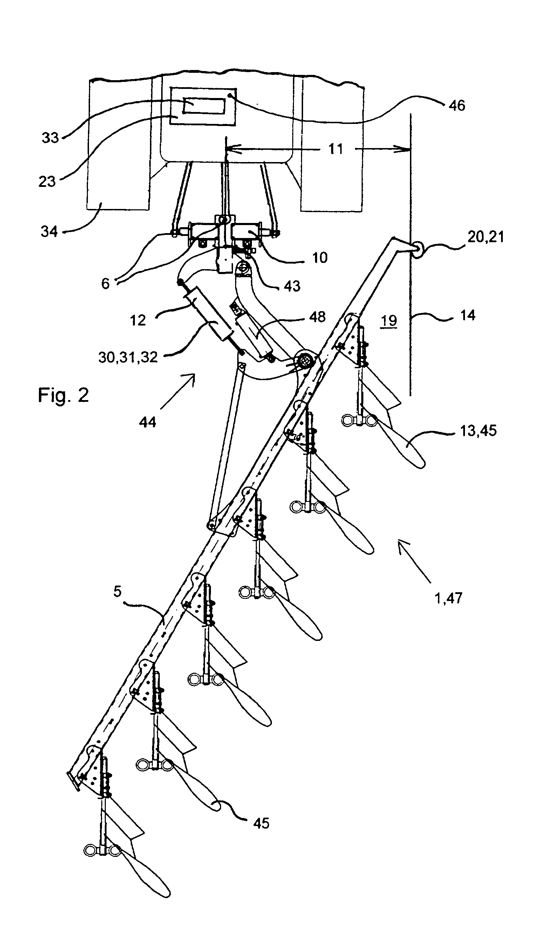

Fig. 2 zeigt einen Drehpflug 1, und zwar einen Anbaudrehpflug 47. Der Drehpflug 1 weist eine Pflugkoppel 10 mit Verbindungsmitteln 6 für den Anbau an ein Zugfahrzeug 34 auf. Die Pflugkoppel 10 trägt auch die Drehvorrichtung 43. Über die Zug- und Trageinrichtung 44 ist die Pflugkoppel 10 mit dem Pflugrahmen 5 verbunden. Der Pflugrahmen 5 weist Pflugkörper 45, 45', 45" auf. Über die Stelleinrichtung 48 kann der Drehpflug 1 für den Onland-Einsatz oder den Einsatz in der Furche umgestellt werden.
Die Stelleinrichtung 12 dient für die Einstellung der Vorderfurchenbreite 19 des ersten Pflugkörpers 13. Über die Abtastvorrichtung 20, die hier ein mechanisches Tastelement 21 aufweist, wird die Vorderfurchenbreite 14 vor dem ersten Pflugkörper 13 ertastet. Die Tastergebnisse werden von dem Computer 23 erfasst und ausgewertet. Weicht die Vorderfurchenbreite 19 von der Arbeitsbreite der restlichen Pflugkörper 45, 45', 45 " zu sehr ab bzw. ändert sich der Abstand 11 zwischen der Pflugkoppel 10 und der Furchenkante 14 vor dem ersten Pflugkörper 13 mehr als zugelassen, wird über das Stellteil 30 der Stelleinrichtung 12 der Abstand 11 so geregelt, dass die Vorderfurchenbreite 19 konstant bleibt.

Das Stellteil 30 kann als Spindelmotor 31 oder als Hydraulikzylinder 32 ausgebildet sein. Auch die hydraulische Stellvorrichtung 48 kann für diese Funktion wahlweise genutzt werden. Dies macht z. B. dann Sinn, wenn die Abstandsabweichungen x größer sind, als durch das Stellteil 30 ausgeglichen werden kann. Der Computer 23 weist die gleichen Funktionen auf, wie der Computer 23 gemäß Fig. 1. Über die Antenne 46 kann der Computer 23 auch mit dem Hofcomputer oder externen Computern kommunizieren und so auch über GPS bzw. DGPS Systeme zusätzlich gesteuert werden.

## Patentansprüche

1. Verfahren zur Bearbeitung von Ackerflächen mit einem Zugfahrzeug und einem Bodenbearbeitungsgerät, deren Fahrtrichtung während des Fahrens kontinuierlich vom Fahrer mit oder ohne Markierungshilfe ausgerichtet wird, wobei dazu die Furchenkante vor dem ersten Bearbeitungsteil geräteseitig oder zugfahrzeugseitig erfasst und ausgewertet wird, wobei zum Onland-Pflügen mit einem Zugfahrzeug und einem als Bodenbearbeitungsgerät dienenden Drehpflug die Furchenkante vor dem ersten Pflugkörper und/oder die Vorderfurchenbreite erfasst und ausgewertet und zur Korrektur und Überwachung der Vorderfurchenbreite eingesetzt wird,
**dadurch gekennzeichnet,**
**dass** dabei die Vorderfurchenbreite des Drehpfluges während der Arbeit konstant zur Arbeitsbreite der restlichen Pflugkörper gehalten wird und zwar unabhängig vom auf dem Land fahrenden Zugfahrzeug und
**dass** im Grenzeinstellbereich ergänzende Lenkkorrekturen dem Fahrer und / oder dem Zugfahrzeug vorgegeben werden.

2. Verfahren nach Anspruch 1,
**dadurch gekennzeichnet,**
**dass** bei Änderungen der Arbeitsbreite pro Körper die Vorderfurchenbreite gemäß Arbeitsbreite der nachfolgenden Pflugkörper eingestellt wird.

3. Bodenbearbeitungsgerät in Form eines Drehpfluges (1), zur Durchführung des Verfahrens nach Anspruch 1 und/oder Anspruch 2, mit einem über die Pflugkoppel (10) mit dem Zugfahrzeug (34) verbundenen Pflugrahmen (5) und mit einer Abtasteinrichtung (20), die die Furchenkante (14) erkennend ausgebildet und mit einem Computer (23) verbunden ist und so eine Vorrichtung bildet, die die erforderlichen Einstellkorrekturen errechnend und über eine Stelleinrichtung (12) die Einstellkorrekturen veranlassend ausgebildet ist,
**dadurch gekennzeichnet,**
**dass** der Pflugrahmen (5) mit der mit dem Pflugrahmen mittelbal verbundenen Stelleinrichtung (12) für die Einstellung des seitlichen Abstandes (11) zwischen der Furchenkante (14) vor dem ersten Pflugkörper (13) und der Pflugkoppel (10) ausgerüstet ist, die den seitlichen Abstand korrigierend mit der die Furchenkante (14) und die Vorderfurchenbreite (19) erkennenden Abtasteinrichtung (20) und dem Computer (23) verbunden ist und so die Einstellkorrekturen des Pflugrahmens (5) veranlasst und
**dass** dem Zugfahrzeug (34) oder dem Bedienterminal ein die u. a. aktuelle Einstellposition der Stelleinrichtung (12) der Vorderfurchenbreite anzeigendes Display (33) zugeordnet ist.

4. Drehpflug nach Anspruch 3,
**dadurch gekennzeichnet,**
**dass** als Abtasteinrichtung (20) ein mechanisches Tastelement (21) vorgesehen ist, das bei Überschreiten vorgegebener Grenzwerte der Vorderfurchenbreite mit der Stelleinrichtung (12) die Korrektur veranlassend verbunden ausgebildet ist.

5. Drehpflug nach Anspruch 3,
**dadurch gekennzeichnet,**
**dass** als Abtasteinrichtung (20) Sensoren (22) vorgesehen sind, die die Furchenkante (14) und/oder die Arbeitsbreite des ersten Pflugkörpers (13) erkennend ausgebildet sind.

6. Drehpflug nach einem der vorhergehenden Ansprüche,
**dadurch gekennzeichnet,**
**dass** Abtasteinrichtung (20) und Computer (23) drahtlos miteinander verbunden sind.

7. Drehpflug nach einem der vorhergehenden Ansprüche,
**dadurch gekennzeichnet,**
**dass** der Computer (23) als Bord-, Hof- oder externer Computer mit Bedienterminal ausgebildet ist.

8. Drehpflug nach einem der vorhergehenden Ansprüche,
**dadurch gekennzeichnet,**
**dass** die Stelleinrichtung (12) eine Vorderfurchenbreitenkorrektur und/oder
-anpassung bei einer seitlichen Abstandsabweichung (x) des Zugfahrzeuges von der Furchenkante vor dem 1. Pflugkörper von 1 bis 100 cm korrigierend ausgebildet ist.

9. Drehpflug nach einem der vorhergehenden Ansprüche,
**dadurch gekennzeichnet,**
**dass** die Stelleinrichtung (12) als Stellteil (30) einen Spindelmotor (31) oder Hydraulikzylinder (32) aufweist.

10. Drehpflug nach einem der vorhergehenden Ansprüche,
**dadurch gekennzeichnet,**
**dass** ein akustischer Anzeiger vorgesehen ist, der einen den Abstand zum Grenzeinstellbereich berücksichtigenden Schwellsignalton ausstrahlend ausgebildet ist.

11. Drehpflug nach einem der vorhergehenden Ansprüche,
**dadurch gekennzeichnet,**
**dass** die Vorrichtung aus Computer (23) und Abtastvorrichtung (20) im Grenzbereich der Stelleinrichtung (12) auf die Lenkeinrichtung des Zugfahrzeuges (34) direkt oder indirekt einwirkend ausgebildet ist.

12. Drehpflug nach einem der vorhergehenden Ansprüche,
**dadurch gekennzeichnet,**
**dass** das Zugfahrzeug (34) per DGPS geführt ist und die dabei üblich auftretenden Abstandsabweichungen (x) durch die Vorrichtung mit Computer (23) und Abtastvorrichtung (20) in Verbindung mit der Stelleinrichtung (12) die Abstandsabweichungen korrigierend ausgebildet ist.

## Claims

1. A method for cultivating areas of arable land with a tractor vehicle and a tillage implement, the direction of travel of which is continuously oriented during travel by the driver with or without a marking aid, wherein for this purpose the furrow edge in front of the first cultivating part is detected and evaluated on the implement side or the tractor vehicle side, wherein, for ploughing on land with a tractor vehicle and a reversible plough serving as a tillage implement, the furrow edge in front of the first plough body and/or the front furrow width are/is detected and evaluated and used to correct and monitor the front furrow width,
**characterized in that**
the front furrow width of the reversible plough is maintained constant relative to the working width of the remaining plough bodies while working, irrespective of the tractor vehicle travelling on the land, and
that steering corrections which are complementary in the limit setting range are predetermined for the driver and/or the tractor vehicle.

2. The method according to Claim 1,
**characterized in that**
when making changes to the working width per body the front furrow width is set according to the working width of the subsequent plough body.

3. A tillage implement in the form of a reversible plough (1), for carrying out the method according to Claim 1 and/or Claim 2, with a plough frame (5), which is connected to the tractor vehicle (34) via the plough coupler (10), and with a sensing equipment (20), which is formed so as to detect the furrow edge (14) and is connected to a computer (23) and thus forms a device which is formed so as to calculate the necessary setting corrections and effect the setting corrections via an adjusting equipment (12),
**characterized in that**
the plough frame (5) is equipped with the adjusting equipment (12), which is indirectly connected to the plough frame, for setting the lateral distance (11) between the furrow edge (14) in front of the first plough body (13) and the plough coupler (10), which is connected to the sensing equipment (20), which detects the furrow edge (14) and the front furrow width (19), and the computer (23) so as to correct the lateral distance and thus effects the setting corrections of the plough frame (5), and that a display (33) which indicates, inter alia, the actual setting position of the adjusting equipment (12) of the front furrow width is associated with the tractor vehicle (34) or the operator terminal.

4. A reversible plough according to Claim 3,
**characterized in that**
a mechanical sensing element (21) is provided as the sensing equipment (20), which element is formed so as to be connected to the adjusting equipment (12) so as to effect the correction when predetermined limit values of the front furrow width are exceeded.

5. The reversible plough according to Claim 3,
**characterised in**
**that** sensors (22) are provided as the sensing equipment (20), which sensors are formed so as to detect the furrow edge (14) and/or the working width of the first plough body (13).

6. The reversible plough according to any one of the preceding Claims,
**characterized in that**
**that** the sensing equipment (20) and the computer (23) are connected together in a wireless manner.

7. The reversible plough according to any one of the preceding Claims,
**characterized in that**
the computer (23) is formed as an on-board, a farm or an external computer with an operator terminal.

8. The reversible plough according to any one of the preceding Claims,
**characterized in that**
the adjusting equipment (12) is formed so as to correct a front furrow width correction and/or adaptation in the event of a lateral distance deviation (x) of the tractor vehicle from the furrow edge in front of the 1^{st} plough body of 1 to 100 cm.

9. The reversible plough according to any one of the preceding Claims,
**characterized in that**
the adjusting equipment (12) has a spindle motor (31) or hydraulic cylinder (32) as the adjusting part (30).

10. The reversible plough according to any one of the preceding Claims,
**characterized in that**
an acoustic indicator is provided which is formed so as to emit a threshold signal tone which takes account of the distance from the limit setting range.

11. The reversible plough according to any one of the preceding Claims,
**characterized in that**
the device consisting of the computer (23) and the sensing equipment (20) is formed so as to act directly or indirectly on the steering equipment of the tractor vehicle (34) in the limit range of the adjusting equipment (12).

12. The reversible plough according to any one of the preceding Claims,
**characterized in that**
the tractor vehicle (34) is guided by DGPS and is formed so as to correct the distance deviations (x) usually occurring in this respect by means of the appliance with the computer (23) and the sensing equipment (20) in connection with the adjusting equipment (12).

## Revendications

1. Procédé pour le traitement de surfaces arables avec un véhicule tracteur et un appareil de traitement de sol dont le sens de marche pendant la conduite est continuellement ajusté par le conducteur avec ou sans aide au marquage, étant donné que, à cet effet, le bord de sillon est saisi et exploité côté appareil ou côté véhicule tracteur devant la première partie de traitement, étant donné que, pour le labourage sur le champ avec un véhicule tracteur et une charrue réversible servant d'appareil de traitement de sol, le bord de sillon devant le premier corps de charrue et/ou la largeur du sillon avant est saisi(e) et exploité(e) et utilisé(e) pour la correction et la surveillance de la largeur du sillon avant,
**caractérisé en ce que**
la largeur du sillon avant de la charrue réversible est maintenue constante par rapport à la largeur de travail des corps de charrue restants pendant le travail, et ce indépendamment du véhicule tracteur qui se déplace sur le champ, et **en ce que**, dans la plage de réglage limite, des corrections de guidage supplémentaires sont prescrites au conducteur et/ou au véhicule tracteur.

2. Procédé selon la revendication 1,
**caractérisé en ce que**
en cas de variation de la largeur de travail, la largeur du sillon avant est réglée pour chaque corps en fonction de la largeur de travail des corps de charrue suivants.

3. Appareil de traitement de sol sous forme d'une charrue réversible (1), pour la réalisation du procédé selon la revendication 1 et/ou la revendication 2, avec une silette (5) reliée au véhicule tracteur (34) par l'intermédiaire de l'attelage de charrue (10) et avec un équipement de balayage (20) qui est formé de manière à détecter le bord de sillon (14) et est relié avec un ordinateur (23) et forme ainsi un dispositif qui est formé de manière à calculer les réglages correctifs nécessaire et à faire procéder aux réglages correctifs par l'intermédiaire d'un équipement de réglage (12),
**caractérisé en ce que**
la silette (5) est équipée de l'équipement de réglage (12), indirectement relié au bâti de charrue, pour le réglage de l'écartement latéral (11) entre le bord de sillon (14) devant le premier corps de charrue (13) et l'attelage de charrue (10), équipement qui est relié de manière à corriger l'écartement latéral avec l'équipement de balayage (20), qui détecte le bord de sillon (14) et la largeur de sillon avant (19), et l'ordinateur (23) et, ainsi, fait procéder aux réglages correctifs du bâti de charrue (5), et **en ce qu'**un afficheur (33) qui affiche entre autres la position de réglage actuelle de l'équipement de réglage (12) de la largeur de sillon avant est affecté au véhicule tracteur (34).

4. Charrue réversible selon la revendication 3,
**caractérisée en ce que**
est prévu comme équipement de balayage (20) un élément de balayage mécanique (21) qui est relié à l'équipement de réglage (12) et, en cas de dépassement de valeurs limites prédéfinies de la largeur de sillon avant, fait procéder à la correction.

5. Charrue réversible selon la revendication 3,
**caractérisée en ce que**
sont prévus comme équipement de balayage (20) des détecteurs (22) qui sont formés de manière à détecter le bord de sillon (14) et/ou la largeur de travail du premier corps de charrue (13).

6. Charrue réversible selon l'une quelconque des revendications précédentes,
**caractérisée en ce que**
l'équipement de balayage (20) et l'ordinateur (23) sont reliés sans fil l'un avec l'autre.

7. Charrue réversible selon l'une quelconque des revendications précédentes,
**caractérisée en ce que**
l'ordinateur (23) est formé comme ordinateur de bord, ordinateur de ferme ou ordinateur externe avec terminal de commande.

8. Charrue réversible selon l'une quelconque des revendications précédentes,
**caractérisée en ce que**
l'équipement de réglage (12) est formé de manière à procéder à une correction et/ou adaptation de la largeur de sillon avant en cas de variation d'écartement latéral (x) du véhicule tracteur du bord de sillon devant le 1^{er} corps de charrue de 1 à 100 cm.

9. Charrue réversible selon l'une quelconque des revendications précédentes,
**caractérisée en ce que**
l'équipement de réglage (12) présente comme organe de commande (30) un moteur à broche (31) ou un cylindre hydraulique (32).

10. Charrue réversible selon l'une quelconque des revendications précédentes,
**caractérisée en ce que**
est prévu un indicateur acoustique qui est formé de manière à émettre un bip sonore de seuil qui tient compte de l'écartement par rapport la plage de réglage limite.

11. Charrue réversible selon l'une quelconque des revendications précédentes,
**caractérisée en ce que**
l'équipement se composant de l'ordinateur (23) et du dispositif de balayage (20) est formé de manière à influer directement ou indirectement dans la plage limite de l'équipement de réglage (12) sur l'équipement de guidage du véhicule tracteur (34).

12. Charrue réversible selon l'une quelconque des revendications précédentes,
**caractérisée en ce que**
le véhicule tracteur (34) est guidé par DGPS et est formé de manière à corriger les variations d'écartement (x) qui se produisent alors habituellement par l'intermédiaire du dispositif se composant de l'ordinateur (23) et du dispositif de balayage (20) en combinaison avec l'équipement de réglage (12).
